# EUROPÄISCHE PATENTSCHRIFT

(11) **EP 1 549 187 B1**
(45) Veröffentlichungstag und Bekanntmachung des Hinweises auf die Patenterteilung: **14.11.2012**
(21) Anmeldenummer: 03770905.2
(22) Anmeldetag: 06.10.2003
(51) Int. Cl.: A47J 37/04

(54) **DREHSPIESS**
ROTATING SPIT
BROCHE ROTATIVE

(30) Priorität: 04.10.2002 DE 10246305; 04.10.2002 DE 10246304
(43) Veröffentlichungstag der Anmeldung: 06.07.2005
(60) Teilanmeldung: 06015181.8
(73) Patentinhaber: Tan Mutfak Makina, Gida Sanayi Ve Ticaret Ltd. Sti., 09010 Aydin (TR)
(72) Erfinder: ÜMIT, Can, 38100 Braunschweig (DE); ÜMIT, Cengiz, 38100 Braunschweig (DE)
(74) Vertreter: Stornebel, Kai
(86) Internationale Anmeldenummer: PCT/DE2003/003319
(87) Internationale Veröffentlichungsnummer: WO 2004/032693

(56) Entgegenhaltungen:
- DE-A- 3 104 636
- US-A- 5 918 534
- US-B1- 6 354 194

## Beschreibung

Die Erfindung betrifft einen Drehspieß mit einem Zentralkörper zur Aufnahme von Lebensmitteln gemäß dem Oberbegriff des Anspruchs 1 und einen Zentralkörper gemäß dem Oberbegriff des Anspruchs 15.

Solche Drehspieße sind insbesondere für die Zubereitung von Döner oder Gyros oder dergleichen geeignet. Zur Zubereitung von Speisen sind die Drehspieße mit einem Wärmestrahler oder Heizelement ausgestattet, der oder das von außen auf die Lebensmittel einwirkt und die Lebensmittel grillt.

Drehspieß-Grillgeräte sind allgemein bekannt und haben insbesondere im Schnellimbissbereich weite Verbreitung gefunden. Zum Zubereiten der Speisen werden einzelne Fleischstücke auf den im allgemeinen senkrecht angeordneten Zentralkörper gesteckt und durch Drehen des Spießes relativ zu dem Heizelement, insbesondere Wärmestrahler, werden die Lebensmittel bzw. das Fleisch gegrillt und anschließend mit einem Messer portionsweise von oben nach unten abgeschnitten. Hierdurch wird ein bisher noch nicht gegrillter Kernbereich der auf dem Zentralkörper aufgeschichteten Lebensmittel der Hitzeeinwirkung des Heizelementes oder Wärmestrahlers ausgesetzt, wodurch in kurzer Zeit eine weitere Schicht der Lebensmittel gegrillt und gegart wird. Eine solche Vorrichtung ist aus der DE 197 40 659 C2 bekannt.

Aus der DE 691 01 473 T 2 ist eine Vorrichtung zum Zubereiten von Fleisch bekannt, die ein äußeres und ein inneres Gehäuse sowie ein Gebläse aufweist, um Kühlluft zwischen den Raum zwischen dem inneren und dem äußeren Gehäuse umzuwälzen. Auf diese Art und Weise wird die Unterseite des Behandlungsraumes, in dem Fleisch zubereitet wird, stärker als die Oberseite gekühlt und auf die Unterseite verspritztes Fett schlägt sich nieder, anstatt daran zu kleben und eventuell zu verkohlen. Die Kaltluft kommt nicht mit den zuzubereitenden Lebensmitteln in Kontakt.

Die FR 2,732,881 A1 beschreibt einen modular aufgebauten Grill mit einem waagerecht angeordneten Drehspieß, der auf einem ausziehbaren Rahmen angeordnet ist. Auf diesem ausziehbaren Rahmen können mehrere Heizelemente hintereinander angeordnet werden, um unterschiedlich große Objekte grillen zu können.

Die DE 31 04 636 A1 beschreibt ein elektrisch betreibbares Grillgerät mit einem in etwa senkrecht stehenden Grillspieß, zu dem in einem Abstand mehrere Infrarot-Strahlungsheizkörper in Form von Heizschlangen angeordnet sind. Die Strahlungsheizkörper sind als keramische Flächenstrahler vorgesehen, mit einem geringen gegenseitigen Abstand neben und/oder übereinander angeordnet sind und sich zu einer im Wesentlichen lückenlosen Fläche ergänzen.

Die US 5,918,534 beschreibt einen Grillspieß mit einem hohlen Zentralkörper, in dem ein Wärmeleitmedium eingebracht ist. Dieses Wärmeleitmedium transportiert die Wärme von außen nach innen in das zu grillende Objekt, so dass die Garzeit verringert wird. Wird das auf dem Spieß befindliche Objekt abgekühlt, transportiert das Medium die Wärme aus dem Objekt nach außen.

Insbesondere bei großen Drehspießen mit entsprechenden Lebensmittelmengen kann es vorkommen, dass ein relativ langer Zeitraum verstreicht, bis die Lebensmittel bzw. das Fleisch vollständig gegrillt und aufgebraucht ist. Dies kann dazu führen, dass das im allgemeinen rohe Fleisch in der Nähe des Zentralkörpers austrocknet oder gar verdirbt.

Aufgabe der vorliegenden Erfindung ist es, den Stand der Technik dahingehend zu verbessern, dass die aufgeschichteten Lebensmittel über einen längeren Zeitraum frisch und hygienisch einwandfrei bleiben.

Erfindungsgemäß wird dies durch einen Drehspieß mit den Merkmalen des Anspruchs 1 sowie durch einen Zentralkörper mit den Merkmalen des Anspruchs 15 gelöst. Vorteilhafte Ausgestaltungen und Weiterbildungen der Erfindung sind in den abhängigen Ansprüchen aufgeführt.

Durch die Kühlung des Zentralkörpers wird erreicht, dass der Kern der aufgeschichteten Lebensmittel kalt, vorzugsweise gefroren bleibt, wodurch sich die Lebensmittel länger frisch halten lassen. Weiterhin wird die Gefahr verringert, dass die Lebensmittel verderben, was zur Folge hat, dass die Lebensmittel über einen längeren Zeitraum hinweg gegrillt werden können.

Um eine kontinuierliche Kühlung des Zentralkörpers und damit auch der Lebensmittel zu erreichen, ist vorgesehen, dass der Zentralkörper zumindest einen Kanal aufweist, der von einem gekühlten Medium durchströmt wird, so dass kontinuierlich Wärme aus den Lebensmitteln abgeführt wird. Dieser Kanal kann durch eine entsprechende Führung, beispielsweise als eine Mäanderform innerhalb des Zentralkörpers, eine durchgehend und nahezu vollständige, umfängliche Kühlung der Wandung des Zentralkörpers bewirken. Der Kanal kann auch so ausgebildet sein, dass er hinter einem großen Teil der Mantelfläche des Zentralkörpers verläuft.

Zur Erneuerung des gekühlten Mediums ist es vorteilhaft, wenn der Zentralkörper mit einem Wärmetauscher dergestalt gekoppelt ist, dass die von den Lebensmitteln aufgenommene Wärme über das gekühlte Medium aufgenommen und mittels des Wärmetauschers an die Umgebung abgegeben wird. Hierzu wird die allgemein bekannte Kühlschranktechnik eingesetzt, wobei aus hygienischen und energetischen Gründen ein geschlossener Kaltluftkreislauf eingesetzt wird. Bei einem offenen Kreislauf kann auch beispielsweise gekühlte Luft in den Zentralkörper eingeleitet werden, die dann in die Umgebung abgeleitet wird.

Zur effektiven Durchströmung des Zentralkörpers ist zumindest ein Zuführkanal und zumindest ein Abfuhrkanal für das gekühlte Medium innerhalb des Zentralkörpers ausgebildet, wobei durch eine geschickte Anordnung der Kanäle eine großflächige Kühlung des Zentralkörpers bewirkt wird.

Um möglichst die Lebensmittel allseitig grillen zu können, ist der Zentralkörper relativ zu dem Heizelement drehbar, vorzugsweise motorisch angetrieben, wobei der Zentralkörper und/oder das Heizelement drehbar gelagert sind.

In einer Weiterbildung der Erfindung ist es vorgesehen, dass radial von dem Zentralkörper beabstandet zumindest ein Kühlelement angeordnet ist, das abnehmbar mit dem Zentralkörper gekoppelt ist, um zu gewährleisten, dass auch bei großen Lebensmittelmengen mit einem entsprechend großen Durchmesser eine ausreichende Kühlung in einer größeren Entfernung von der Außenwandung des Zentralkörpers ermöglicht wird. Insbesondere in dem Bereich zwischen Zentralkörper und radial beabstandetem Kühlelement wird eine effektive Kühlung der dort befindlichen Lebensmittel erreicht, da eine radial gesehen beidseitige Kühlung und Wärmeabfuhr möglich wird. Die abnehmbare Kopplung mit dem Zentralkörper hat den Vorteil, dass nach dem Zubereiten bzw. Abschneiden der Lebensmittel bis zu dem Kühlelement bzw. den Kühlelementen das Kühlelement lediglich abgenommen werden muss, ohne die Zubereitungstätigkeit für längere Zeit unterbrechen zu müssen. Nach dem Abnehmen des Kühlelementes kann unmittelbar mit der weiteren Zubereitung der Lebensmittel, insbesondere dem Grillen, fortgefahren werden.

Das Kühlelement ist vorteilhafterweise im wesentlichen parallel zu dem Zentralkörper ausgerichtet, wobei verschiedene Varianten hinsichtlich der Formengestaltung vorgesehen sind. Neben einer zylinderwandartigen Ausgestaltung des Kühlelementes, die zu einem Ringspalt zwischen dem Zentralkörper und der Innenwandung des Kühlelementes führt, sind einzelne, sich koaxial zu der Längserstreckung des Zentralkörpers ausgerichtete stab- oder plattenförmige Kühlelemente vorgesehen. Vorzugsweise ist eine haubenförmige, abnehmbare Abdeckung der geschichteten Lebensmittel in dem Bereich zwischen dem Zentralkörper und dem Kühlelement ausgebildet, um ein Austrocknen von oben zu verhindern; die haubenförmige Abdeckung kann ebenfalls von einem Kühlmedium durchströmt oder mit diesem gefüllt sein, um eine Kühlwirkung von oben zu bewirken.

Es ist vorgesehen, dass das Kühlelement mit zumindest einem Kanal versehen ist, der von einem gekühlten Medium durchströmt wird, so dass Wärmeenergie über einen langen Zeitraum hinweg durch das Kühlelement abgeführt werden kann.

Weiterhin ist vorgesehen, dass in dem Zentralkörper des Drehspießes Auslaßöffnungen eingearbeitet sind, die mit Kanälen innerhalb der Lebensmittel in Verbindung stehen, so dass das gekühlte Medium durch die Lebensmittel hindurchströmt. Dabei ist das gekühlte Medium vorzugsweise Luft, die unmittelbar mit dem Lebensmittel in Kontakt tritt, so dass ein direkter Wärmeübergang erfolgen kann. Die Ausbildung entsprechender Strömungskanäle innerhalb der Lebensmittel hat den Vorteil, dass gegebenenfalls in die Lebensmittel eingelassene Kühlelemente nicht entfernt werden müssen. Weiterhin wird der apparative Aufwand verringert und eine beliebige Anzahl von Kühlkanälen kann innerhalb des Lebensmittels selbst ausgebildet sein. Auf diese Art und Weise ist eine sehr effektive Kühlung auch großer Lebensmittel - insbesondere Fleischspieße - möglich. Sobald die äußeren Schichten der Lebensmittel entsprechend abgeschnitten worden sind, bis die Kanäle innerhalb der Lebensmittel an die Oberfläche treten, werden entsprechende Verschließmechanismen betätigt, um ein ungeregeltes Ausströmen des Kühlmediums, insbesondere gekühlter Luft, zu verhindern. Vorteilhafterweise sind auch die Kanäle innerhalb der Lebensmittel bzw. der Fleischmasse als ein Zulauf und ein Rücklauf ausgebildet, so dass ein geschlossenes System des Kühlmittelkreislaufes hergestellt werden kann. Die Herstellung der Kanäle erfolgt beispielsweise durch Einlegen von Stangen, die nach der Fertigstellung und insbesondere nach dem Gefrieren zum Haltbarmachen des Lebensmittelspießes entnommen werden.

In einer Weiterbildung der Erfindung ist es vorgesehen, dass die innerhalb der Lebensmittel ausgebildeten Kanäle über eine auf dem oberen Ende des Zentralkörpers aufzusetzende Abdeckung oder Abdeckhaube mit dem Kühlmittelstrom verbunden sind, wobei diese Abdeckhaube Zu- und Ableitungen zu den entsprechenden Kanälen aufweist. Im einfachsten Fall erstrecken sich die Kühlmittelkanäle innerhalb der Lebensmittel parallel zu der Längserstreckung des Zentralkörpers und eine Haube verteilt den zugeführten Kühlmittelstrom über die Zuleitung in einen oder mehre Kanäle, die mit einem entsprechenden Rückführkanal innerhalb des Lebensmittels in Verbindung stehen. An dem oberen Ende des Rückführkanals sind entsprechende Abfuhrleitungen eingesetzt, die an der Haube ausgebildet sind und mit dem Rückführkanal des Zentralkörpers in Verbindung stehen. Auf diese Weise wird neben einer Außenwandkühlung des Zentralkörpers mit Rückführung des erwärmten Kühlmittelstromes auch eine unmittelbare Kühlung des Lebensmittelspießes in einem kontinuierlichen Kühlmittelstrom realisiert.

Alternativ zu einer Ausbildung der Zu- und Ableitungen über eine Abdeckung ist vorgesehen, dass radial ausgerichtete Öffnungen in der Außenwandung des Zentralkörpers ausgebildet sind, die mit dem innerhalb der Lebensmittel ausgebildeten Kanäle in Verbindung stehen. Diese Öffnungen können wahlweise verschlossen werden, so dass bei einer Umschichtung des Zentralkörpers in einer geringen Höhe weiterhin effektiv eine Kühlung durchgeführt werden kann. Auf diese Art und Weise kann eine angepasste Umschichtung der Zentralkörper je nach Bedarf erfolgen.

Der notwendige Kühlkompressor ist für den Tiefkühlbereich ausgelegt, so dass der Kern der um den Zentralkörper geschichteten Lebensmittel tiefgekühlt bleiben kann. Um möglichst wenig Energie zu verbrauchen, ist der Kühlkreislauf geschlossen, wobei insbesondere Luft durch den Zentralkörper und die gegebenenfalls ausgebildeten Kanäle bzw. Kühlelement zirkuliert. Diese Luft als Kühlmedium wird fortlaufend über einen Wärmetauscher gekühlt, wobei die Einrichtung für die Kühlung des Mediums entweder unterhalb des Zentralkörpers in einem entsprechenden Arbeitstisch oder einer Theke untergebracht ist oder aber ein anderer Ort und einer anderen Stelle, beispielsweise in Kellerräumen untergebracht sein kann.

Weiterhin ist vorgesehen, dass eine Halterung U-förmig ausgebildet und das Heizelement einseitig mit seinem unteren Ende an dem oberen Schenkel der Halterung befestigt ist, wobei der obere Schenkel der Halterung unterhalb der Lebensmittel angeordnet ist, so dass die Lebensmittel vollständig der über das Heizelement erzeugten Wärme ausgesetzt sind. Zu Reinigungs- oder Transportzwecken ist das Heizelement von der Halterung abnehmbar ausgebildet.

Die Erfindung betrifft weiterhin einen Zentralkörper zur Aufnahme von Lebensmitteln, insbesondere von geschichtetem Fleisch und geschichteten Fleischprodukten, die um den Zentralkörper herum angeordnet sind, wobei der Zentralkörper mit einer Kühlung versehen ist. Hinsichtlich der konkreten Ausgestaltung des Zentralkörpers wird auf die obigen Ausführungen verwiesen.

Nachfolgend werden anhand der beigefügten Figuren Ausführungsbeispiele der Erfindung näher erläutert werden. Gleiche Bezugszeichen in den Figuren bezeichnen gleiche Bauteile. Es zeigen:
- Figur 1 -: eine Querschnittsansicht eines Drehspießes mit Heizelement;
- Figur 2 -: einen Drehspieß mit einem parallel zu einem Zentralkörper angeordneten Kühlelement;
- Figur 3 -: eine Seitenansicht einer Heizelementenhalterung; sowie
- Figuren 4 und 5: Einzeldarstellungen eines Heizelementes.

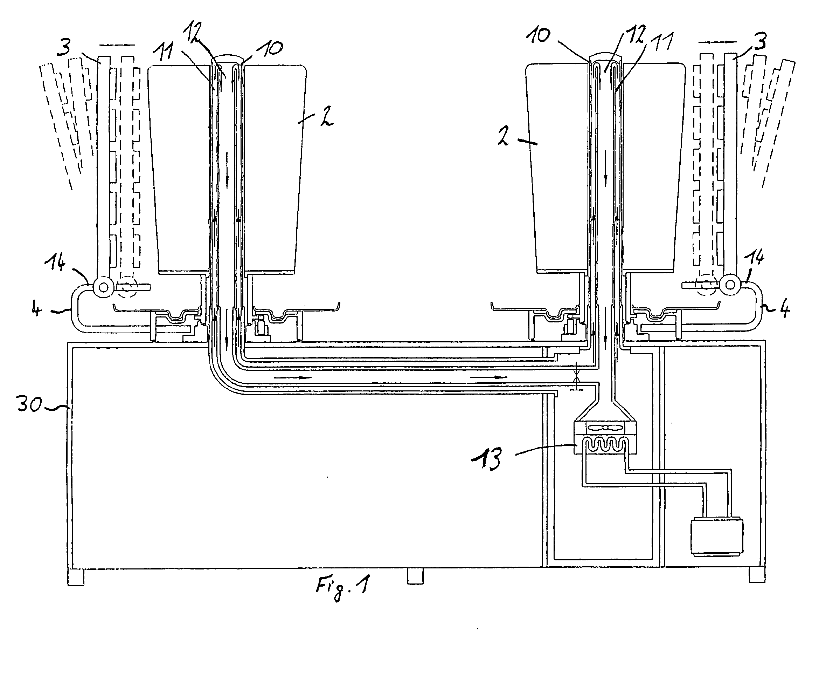

Figur 1 zeigt in Querschnittsansicht eine Zubereitungsstation für Döner oder Gyros mit zwei nebeneinander angeordneten Drehspießen, die aus einem drehbar gelagerten Zentralkörper 10 mit senkrecht dazu beabstandeten Scheiben zur Auflage von Lebensmitteln 2 versehen sind. Die Lebensmittel 2 sind übereinander aufgeschichtet und um den Zentralkörper 10 herum angeordnet. Seitlich zu dem Umfang der Lebensmittel beabstandet sind Heizstrahler 3 angeordnet, die in ihrer Entfernung und in ihrer Neigung zu dem Zentralkörper 10 veränderbar sind. Innerhalb des Zentralkörpers 10 sind Kanäle 11, 12 eingearbeitet, durch die ein beispielsweise durch eine Pumpe gefördertes Kühlmedium hindurchströmt, wie es durch die Pfeile angedeutet ist. Das gekühlte Medium, vorzugsweise gekühlte Luft, alternativ ein Kältemittel oder kaltes Wasser, wird durch die an der Außenwandung des Zentralkörpers 10 angeordneten Kanäle 11 hindurchgeführt und entzieht somit den um den Zentralkörper 10 herum angeordneten Lebensmitteln 2 die Wärme bzw. hält die Lebensmittel 2 gekühlt. Ein Rückstromkanal 12 ist zentral innerhalb des Zentralkörpers 10 ausgebildet und führt das erwärmte Medium zu einem Wärmetauscher 13, der in bekannter Art und Weise wie ein Kühlschrank funktioniert. Die entsprechenden Bauelemente für eine Kühlung des Mediums, wie Wärmetauscher, Drosselstelle, Kompressor und dergleichen sind allgemein bekannt und werden nicht näher beschrieben.

Die Figur 1 zeigt, dass mehrere Zentralkörper 10 nebeneinander angeordnet und an einer einzigen Kühlmittelversorgung angeschlossen sind, wobei das Kühlmittel aus einem Umluftstrom besteht, der an dem Wärmetauscher 13 gekühlt und anschließend durch die entsprechenden Kanäle den Zentralkörpern zugeleitet wird. Die Kühlluft kann entfeuchtet, gefiltert und entkeimt werden, um eine hygienisch unbedenkliche Kühlung zu ermöglichen.

Alternativ zu einer kontinuierlichen Kühlung und einer steten Zu- und Abfuhr von Kühlmittel ist es vorgesehen, dass der Zentralkörper 10 mit einem gekühlten Medium gefüllt ist, das eine entsprechende Kühlwirkung auf die Lebensmittel 2 in der Umgebung des Zentralkörpers 10 ausübt.

Ebenfalls kann das Kühlmittel in einer einkanaligen Spiralform oder durch Umströmung in einem zylindrischen Ringspalt geführt werden.

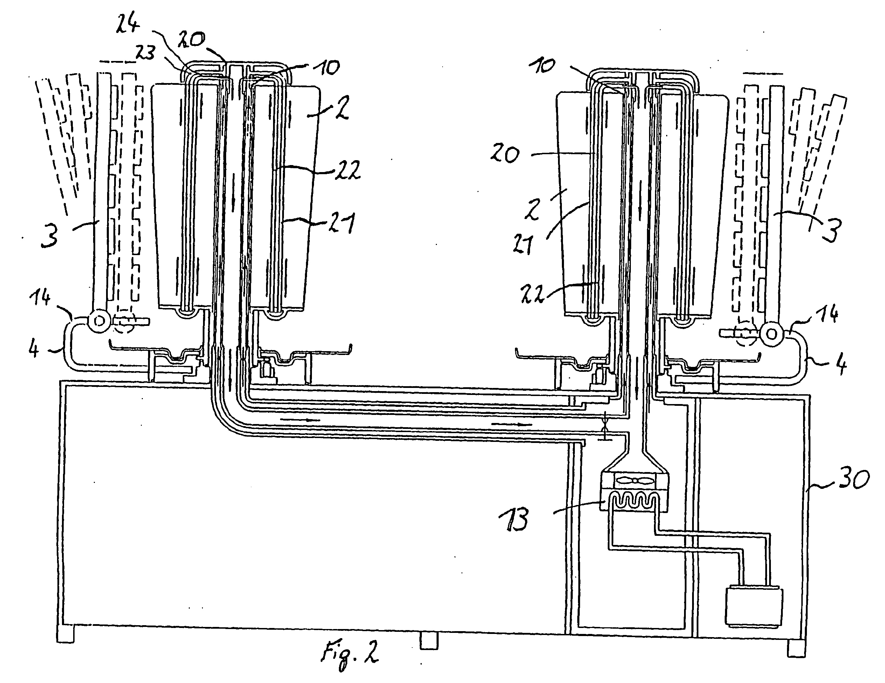

In der Figur 2 ist eine Weiterbildung der Erfindung gemäß Figur 1 dargestellt, bei der auf eine obere Öffnung des Zentralkörpers 10 ein Abdeckhaubenelement 20 aufgesetzt wird, das durch das Aufsetzen auf den Zentralkörper 10 mit dem Kühlmittelkreislauf verbunden ist. Das Abdeckhaubenelement 20 weist Zu- und Ableitungen 23, 24 auf, die mit entsprechenden Kanälen 11, 12 des Zentralkörpers 10 verbunden sind. Die Zu- und Ableitungen 23, 24 verbinden den Kühlmittelstrom mit parallel zu dem Zentralkörper 10 verlaufenden Kühlelementen 21, 22 auf, die von dem gekühlten Medium durchströmt werden. Die Kühlmittelzufuhr in die Stäbe oder Wände der Kühlelemente 21, 22 erfolgt durch einen Bypass in dem Zuführkanal 11 des Zentralkörpers 10 und führt das gekühlte Medium durch die Zuleitung 23 und das Kühlelement 21 hindurch. Das Kühlelement 22, das als Rückführkanal dient, mündet über die Ableitung 24 in den Rückführkanal 12 des Zentralelementes, so dass ein Kreislaufabzweig des gekühlten Mediums oder Kühlmittels durch einfaches Aufsetzen realisiert wird. Aus lebensmitteltechnischen Gründen erfolgt die Verwendung gekühlter Luft; Alternativen sind möglich.

Statt eingelassener Kühlelemente können Kühlkanäle unmittelbar in dem Lebensmittel 2 eingearbeitet sein, so dass die Zu- und Ableitungen 2, 24 unmittelbar die Kühlluft in den Lebensmittelkörper 2 einleiten.

Die Abdeckhaube 20 ist abnehmbar und kann gegen eine Abdeckung mit einem kleineren Durchmesser ausgetauscht werden, so dass eine Anpassung an den sich verändernden Durchmesser des Lebensmittels 2 erfolgen kann, wenn die äußeren Kühlkanäle angeschnitten sind und nach außen offen liegen.

Die Variante gemäß der Figur 2 hat den Vorteil, dass die mitunter große Masse an Lebensmitteln 2 effektiv gekühlt werden kann, ohne dass ein Verlust an der Handhabbarkeit und der Zubereitungsfähigkeit der Lebensmittel 2 mittels des Wärmestrahlers 3 auftritt. Nachdem die ersten Schichten des zubereiteten Lebensmittels von dem ursprünglichen Lebensmittelformkörper abgeschnitten wurden, kann die Abdeckhaube 20 abgenommen und das Kühlelement 21, 22 herausgezogen werden, so dass nur noch eine Kühlung des Zentralbereiches durch den Zentralkörper 10 erfolgt.

Neben einer Zufuhr gekühlter Luft von oben durch die Abdeckhaube 20 und die entsprechenden Zu- und Ableitungen 23, 24 ist es vorgesehen, dass gekühlte Luft seitlich aus Öffnungen in der Außenwandung des Zentralkörpers 10 in entsprechend angeordnete und mit den Öffnungen in Verbindung stehenden Kanälen innerhalb der aufgeschichteten Lebensmittel hineinströmt. Diese Öffnungen sind entweder manuell oder über eine elektronische Steuerung, die über Sensoren eine entsprechende Öffnung oder ein Verschließen über Verschlußeinrichtungen regelt, verschließbar. Die entsprechenden Öffnungen innerhalb der Außenwandung des Zentralkörpers 10 werden beispielsweise durch Schieber verschlossen.

In den Figuren 1 und 2 ist eine vollständige Zubereitungseinrichtung für Döner und Gyros auf einem Unterschrank 30 dargestellt, wobei ein Teil des Unterschrankes 30 als ein Kühlschrank zu nutzen wäre. Der Wärmetauscher 13 ist in einem abgeschlossenen Raum in dem Unterschrank 30 angeordnet, aus dem die gekühlte Luft in die jeweiligen Zentralkörper geleitet wird. Dieser Raum ist tiefgekühlt und über Wärmeleitungen sind die benachbarten Räume des Unterschrankes 30 ebenfalls kühler als die Umgebung und können beispielsweise als Kühltheke für die Aufbewahrung von Getränke oder Lebensmitteln wie Gemüse oder Salate verwendet werden. Der Motor für die Kühlung kann entweder ebenfalls in dem Unterschrank 30 angeordnet sein oder aber an einem entfernten Ort, beispielsweise in einem anderen Raum, angeordnet werden. Ebenfalls kann eine komplett externe Zuluftführung realisiert werden.

Um ein Vereisen der gesamten Anlage zu verhindern, ist es wichtig, dass der Kreislauf geschlossen bleibt, gegebenenfalls ist die rückgeführte Luft zu entfeuchten, um ein Vereisen der Anlage zu vermeiden.

Die Heizstrahler 3, die seitlich an dem Drehspieß angeordnet sind, sind sowohl in ihrer Neigung als auch in ihrer Entfernung zu dem Zentralkörper 10 verstellbar, wobei sie lediglich an ihrem unteren Ende verschwenkbar und verschieblich an einer entsprechenden Führung und Lagerung befestigt sind. Die Heizelemente 3 können leicht von der Führung abgenommen und aufgesteckt werden, ebenfalls können zu Transportzwecken die Heizelemente 3 abgenommen oder lediglich umgeklappt werden, so dass eine einfache und preisgünstige Verpackung möglich ist.

Die doppelwandigen Zentralkörper 10 werden einfach auf eine entsprechende Aufnahme aufgesetzt und stellen so die Verbindung zu dem Kühlmittelstrom her. Gegebenenfalls vorhandene Spalten in dem Kontaktbereich zwischen Zentralkörper 10 und einem Absaugventilator, der für eine entsprechende Rückströmung sorgt, schließen sich durch Vereisen in aller Regel selbsttätig. Dadurch ist es möglich, dass der Drehspieß wahlweise mit oder ohne Kühlung betrieben werden kann. Gegebenenfalls kann eine Kühlung auch nachgerüstet werden, also der Zentralkörper zunächst ohne Kühlaggregat betrieben und dann bei Bedarf mit einer Kühlung versehen werden.

Die Erfindung ist selbstverständlich auch ohne einen dazugehörigen Wärmestrahler 3 zur Kühlung und Frischhaltung von gestapelten Lebensmitteln einsetzbar. Eine solche Anwendung ist für fertig zubereitete Lebensmittel oder nicht zu grillende Lebensmittel vorgesehen, die auf einem Zentralkörper 10 gelagert werden können oder sollen. Zur besseren Zugänglichkeit sind die Zentralkörper 10 drehbar, vorzugsweise motorisch angetrieben.

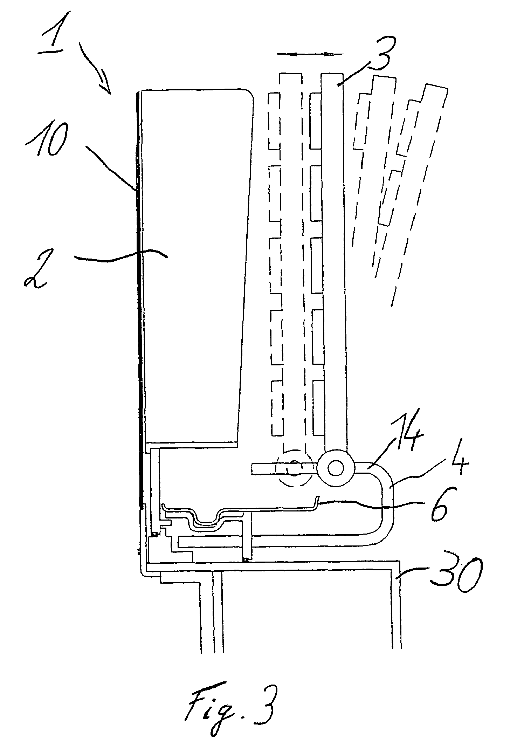

Die Figur 3 zeigt in Seitenansicht ein Drehspieß-Grillgerät 1 mit einem Zentralkörper 10, um den herum Lebensmittel 2, vorzugsweise Plattenfleisch oder eine Hackfleischmasse, aufgeschichtet ist. Der Zentralkörper 10 ist drehbar in einer Aufnahme gelagert, wobei der Zentralkörper 10 vorzugsweise motorisch angetrieben ist. Die Aufnahme ist auf einem Unterschrank 30 oder einer Kühltheke montiert, auf dem ebenfalls eine Halterung 4 angeordnet ist, die als ein liegendes U mit einem verlängerten Schenkel ausgebildet ist. Der unten liegende Schenkel der Halterung 4 ist an dem Unterschrank 30 montiert und kann alternativ an der Aufnahme des Drehspießes 10 angeordnet sein.

An dem oberen Schenkel 14 der Halterung 4 ist ein Heizelement 3 befestigt, wobei die Befestigung einseitig an dem unteren Ende des Heizelementes 3 erfolgt. Das Heizelement 3 ist entlang des oberen Schenkels 14 der Halterung 4 verschieblich und arretierbar befestigt, so dass der Abstand zwischen dem Heizelement 3 und dem Zentralkörper 10 und damit auch zu den zu grillenden Lebensmitteln 2 verändert werden kann. Ebenfalls ist das Heizelement 3 über ein Gelenk an dem unteren Ende verschwenkbar ausgebildet, wobei auch dieses Gelenk arretierbar ist, um eine einmal eingestellte Neigung des Heizelementes 3 beizubehalten.

Durch die verschiebliche und verschwenkbare Festlegung des Heizelementes 3 an der Halterung 4 kann neben einer optimalen Ausrichtung des Heizelementes 3 zu den zu grillenden Lebensmitteln 2 auch eine platzsparende und kompakte Bauweise realisiert werden, ohne dass der bislang übliche Rahmen oder Haltebügel, der oberhalb des Heizelementes und des Zentralkörpers ausgebildet war, um diese aufzunehmen, vorhanden sein muss. Zum Transport oder für Reinigungszwecke kann der Zentralkörper 1o einfach von der Aufnahme abgenommen und das Heizelement 3 waagerecht abgeklappt werden, so dass ein geringes Packvolumen vorliegt. Ebenfalls ist eine leichte Zugänglichkeit der Rückseite des Heizelementes 3 gegeben, wodurch dieses leichter zu reinigen ist.

Der Zentralkörper 10 wird einfach auf die Aufnahme aufgesteckt, wobei bereits die Lebensmittel 2 um den Zentralkörper 10 herum aufgeschichtet wurden. Das sich im wesentlichen parallel zur Längserstreckung des Zentralkörpers 10 erstreckende Heizelement 3 wird in Neigung und Entfernung zu den zu grillenden Lebensmitteln 2 ausgerichtet und eingeschaltet und der Zubereitungsprozeß kann beginnen.

Die Ausbildung der Halterung 4 als ein U-förmiger Träger hat den Vorteil, dass einerseits durch den Verbindungsbereich der beiden waagerechten Schenkel eine Schutzwirkung für die Aufnahme des Zentralkörpers 10 ausgeübt wird; weiterhin kann in dem Raum zwischen den Schenkeln ein Auffangblech 6 angeordnet werden, das das von den Lebensmitteln 2 herabtropfende Fett auffängt.

Die Aufnahme für den Zentralkörper 10 und die Halterung 4 können als Baueinheit ausgebildet sein, die durch das Heizelement 3, das Auffangblech 6 und den aufzusteckenden Zentralkörper 10 komplettiert wird. Diese Anordnung kann dann auf dem Unterschrank 30 montiert werden, der gleichzeitig als Kühltheke für Getränke oder andere Lebensmittel dienen kann, wobei in der Aufnahme für den Zentralkörper 10 ein motorischer Antrieb integriert sein kann. Alternativ kann das Drehspieß-Grillgerät 1 komplett mit dem Unterschrank gefertigt, montiert und geliefert werden, wobei durch Umklappen des Heizelementes 3 nach dem Abnehmen des Zentralkörpers 10, die Bauhöhe und damit das Verpackungsvolumen reduziert wird.

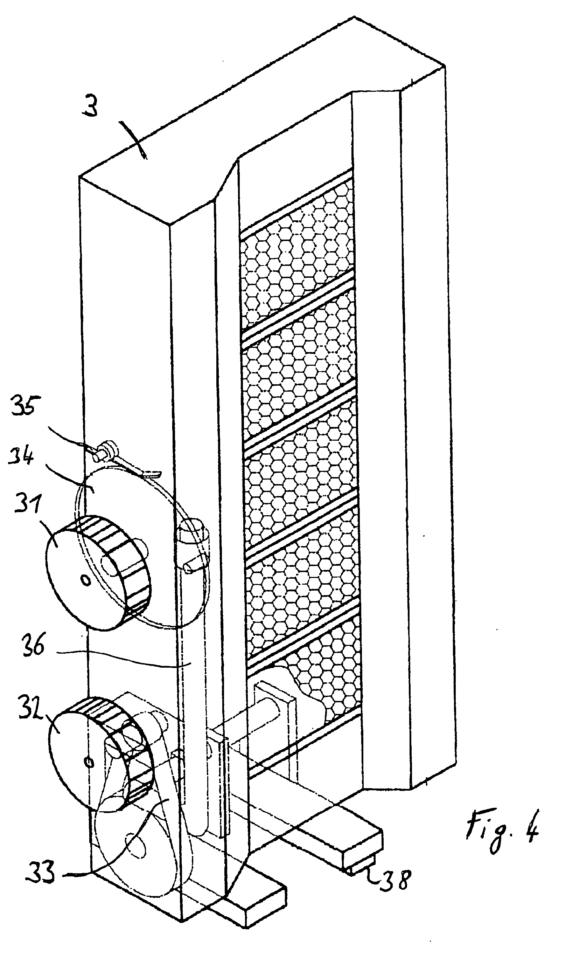

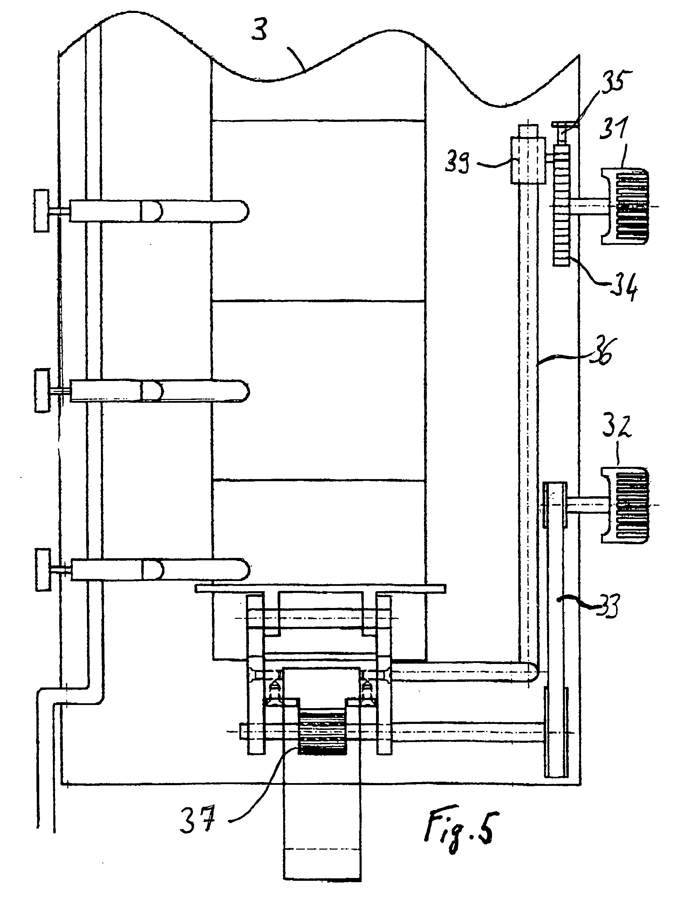

In der Figur 4 ist in perspektivischer Darstellung mit Teilschnitten ein Heizelement 3 dargestellt, das eine Höheneinstellvorrichtung 31 und eine Längsverstelleinrichtung 32 jeweils in Gestalt von Drehgriffen aufweist. Die Figur 5 zeigt in einer Schnittdarstellung ein solches Heizelement 3. Eine Höheneinstellung des Heizelementes zur Anpassung an das zu grillende Lebensmittel erfolgt über den Drehknopf 31, der mit einem Zahnrad 34 drehfest verbunden ist, wobei das Zahnrad 34 über eine Feder 35 belastet ist, so dass eine Feststellung innerhalb der Höhe über die Feder 35 und eine entsprechende Rasterung erfolgt. Eine Verschiebehülse 39 des Heizelementes 3 ist exzentrisch an dem Zahnrad 34 gelagert, so dass durch eine Drehbewegung des Drehknopfes 31 eine Höhenverlagerung des Heizelementes 3 bewirkt werden kann. Die Verschiebehülse 39 ist an einer ortsfesten Stange 36 verschieblich gelagert.

Zur Annäherung oder Entfernung des Heizelementes von dem zu grillenden Gegenstand ist eine Verstellung über den Drehgriff 32, ein Riementrieb 33 und eine drehbar gelagerte Zahnwalze 37 vorgesehen, wobei die Zahnwalze 37 in eine Zahnstange 38 einer Halterung eingreift, so dass durch entsprechende Drehbewegungen des Drehknopfes 32 das Heizelement 3 verfahren wird.

## Patentansprüche

1. Drehspieß mit einem Zentralkörper (10) zur Aufnahme von Lebensmitteln (2), insbesondere geschichtetes Fleisch und geschichtete Fleischprodukte, die um den Zentralkörper (10) angeordnet sind und einem von außen auf die Lebensmittel (2) einwirkenden Heizelement (3), wobei der Zentralkörper (10) mit einer Kühlung versehen ist, wobei in dem Zentralkörper (10) zumindest ein Kanal (11, 12) vorgesehen ist, der von einem gekühlten Medium durchströmt wird **dadurch gekennzeichnet, dass** in dem Zentralkörper (10) zumindest ein Zuführkanal (11) und zumindest ein Abfuhrkanal (12) für das gekühlte Medium ausgebildet sind.

2. Drehspieß nach Anspruch 1, **dadurch gekennzeichnet, dass** der Zentralkörper (10) einen Hohlraum (11, 12) aufweist, der mit einem Kältespeicher gefüllt ist.

3. Drehspieß nach Anspruch 1 oder 2, **dadurch gekennzeichnet, dass** der Zentralkörper (10) relativ zu dem Heizelement (3) drehbar, insbesondere motorisch angetrieben ist.

4. Drehspieß nach einem der voranstehenden Ansprüche, **dadurch gekennzeichnet, dass** radial von dem Zentralkörper (10) beabstandet zumindest ein Kühlelement (20, 21, 22) angeordnet ist, das abnehmbar mit dem Zentralkörper (10) gekoppelt ist.

5. Drehspieß nach Anspruch 4, **dadurch gekennzeichnet, dass** das Kühlelement (21, 22) im wesentlichen parallel zu dem Zentralkörper (10) ausgerichtet ist.

6. Drehspieß nach Anspruch 4 oder 5, **dadurch gekennzeichnet, dass** das Kühlelement mit zumindest einem Kanal (21, 22) versehen ist, der von einem gekühlten Medium durchströmt wird.

7. Drehspieß nach einem der voranstehenden Ansprüche, **dadurch gekennzeichnet, dass** in dem Zentralkörper (10) Auslaßöffnungen vorgesehen sind, die mit Kanälen innerhalb der Lebensmittel (2) in Verbindung stehen, so dass das gekühlte Medium durch die Lebensmittel (2) strömt.

8. Drehspieß nach Anspruch 7, **dadurch gekennzeichnet, dass** die innerhalb der Lebensmittel (2) ausgebildeten Kanäle über eine mit Zu- und Ableitungen (23, 24) versehene Abdeckhaube (20) mit dem Zentralkörper (10) und dem Kühlmittelstrom verbunden sind.

9. Drehspieß nach Anspruch 7, **dadurch gekennzeichnet, dass** die innerhalb der Lebensmittel (2) ausgebildeten Kanäle über radial ausgerichtete Öffnungen in der Außenwandung des Zentralkörpers (10) mit dem Kühlmittelstrom verbunden sind.

10. Drehspieß nach einem der voranstehenden Ansprüche, **dadurch gekennzeichnet, dass** das Heizelement (3) an seinem unteren Ende mit einer Vorrichtung versehen ist, mit dem es verschwenkbar und verschieblich an einer Halterung (4) befestigbar ist.

11. Drehspieß nach Anspruch 10, **dadurch gekennzeichnet, dass** die Halterung (4) U-förmig ausgebildet und das Heizelement (3) einseitig mit seinem unteren Ende an dem oberen Schenkel (14) der Halterung (4) befestigt ist, wobei der obere Schenkel (14) der Halterung (4) unterhalb der Lebensmittel (2) angeordnet ist.

12. Drehspieß nach Anspruch 10 oder 11, **dadurch gekennzeichnet, dass** das Heizelement (3) von der Halterung (4) abnehmbar ist.

13. Drehspieß nach einem der voranstehenden Ansprüche, **dadurch gekennzeichnet, dass** unterhalb des Zentralkörpers (10) eine Kühltheke (30) angeordnet ist.

14. Drehspieß nach Anspruch 13, **dadurch gekennzeichnet, dass** die Kühltheke (30) den Wärmetauscher (13) aufnimmt.

15. Zentralkörper (10) zur Aufnahme von Lebensmitteln (2), insbesondere von geschichtetem Fleisch und geschichteten Fleischprodukten, die um den Zentralkörper (10) angeordnet sind, wobei der Zentralkörper (10) zumindest einen Kanal (11, 12) aufweist, in den ein Kälteträger einführbar ist, wobei der Zentralkörper (10) mit einer Kühlung versehen ist und von einen gekühlten Medium durchströmt wird, **dadurch gekennzeichnet, dass** in dem Zentralkörper (10) zumindest ein Zuführkanal (11) und zumindest ein Abfuhrkanal (12) für das gekühlte Medium ausgebildet sind

16. Zentralkörper nach Anspruch 15, **dadurch gekennzeichnet, dass** der Zentralkörper (10) einen Hohlraum aufweist, der mit einem Kältespeicher gefüllt ist.

17. Zentralkörper nach einem der Ansprüche 15 oder 16, **dadurch gekennzeichnet, dass** in dem Zentralkörper (10) zumindest ein Kanal (11, 12) vorgesehen ist, der von einem gekühlten Medium durchströmt wird oder mit einem gekühlten Medium gefüllt ist.

18. Zentralkörper nach einem der Ansprüche 15 bis 17, **dadurch gekennzeichnet, dass** der Zentralkörper (10) mit einem Wärmetauscher (13) gekoppelt ist.

19. Zentralkörper nach einem der Ansprüche 15 bis 18, **dadurch gekennzeichnet, dass** radial von dem Zentralkörper (10) beabstandet zumindest ein Kühlelement (20) angeordnet ist, das abnehmbar mit dem Zentralkörper (10) gekoppelt ist.

20. Zentralkörper nach Anspruch 19, **dadurch gekennzeichnet, dass** das Kühlelement (20) im Wesentlichen parallel zu dem Zentralkörper (10) ausgerichtet ist.

21. Zentralkörper nach Anspruch 19 oder 20, **dadurch gekennzeichnet, dass** das Kühlelement (20) mit zumindest einem Kanal (21) oder Hohlraum versehen ist, der von einem gekühlten Medium durchströmt wird oder mit einem gekühlten Medium gefüllt ist.

22. Zentralkörper nach einem der Ansprüche 15 bis 21, **dadurch gekennzeichnet, dass** radial ausgerichtete Öffnungen in der Außenwandung des Zentralkörpers (10) zur Ableitung des gekühlten Mediums in im Lebensmittel (2) ausgebildete Kanäle.

23. Zentralkörper nach Anspruch 22, **dadurch gekennzeichnet, dass** Verschlußeinrichtungen für die Öffnungen in der Außenwandung des Zentralkörpers (10) vorgesehen sind.

## Claims

1. The Rotating spit with a central body (10) for supporting foodstuffs (2), in particular layered meat and layered meat products, arranged around the central body (10), and with a heating element (3) acting from outside on the foodstuffs (2), wherein in the central body (10) is provided with at least one channel (11, 12), through which cooled medium flows, **characterized in that** the central body (10) has at least one delivery channel (11) and at least one removal channel (12) for the cooled medium.

2. The rotating spit as claimed in claim 1, **characterized in that** the central body (10) has a hollow space (11, 12) which is filled with a cold accumulator.

3. The rotating spit as claimed in claim 1 or 2, **characterized in that** the central body (10) can turn relative to the heating element (3) and in particular is driven by a motor.

4. The rotating spit as claimed in one of the preceding claims, **characterized in that**, arranged at a radial spacing from the central body (10), there is at least one cooling element (20, 21, 22) which is coupled to the central body (10) in a removable manner.

5. The rotating spit as claimed in claim 4, **characterized in that** the cooling element (21, 22) is oriented substantially parallel to the central body (10).

6. The rotating spit as claimed in claim 4 or 5, **characterized in that** the cooling element is provided with at least one channel (21, 22) through which a cooled medium flows.

7. The rotating spit as claimed in one of the preceding claims, **characterized in that** the central body (10) is provided with outlet openings which communicate with channels inside the foodstuffs (2) in such a way that the cooled medium flows through the foodstuffs (2).

8. The rotating spit as claimed in claim 7, **characterized in that** the channels formed inside the foodstuffs (2) are connected to the central body (10) and to the coolant stream via a cover cap (20) provided with inlet and outlet lines (23, 24).

9. The rotating spit as claimed in claim 7, **characterized in that** the channels formed inside the foodstuffs (2) are connected to the coolant stream via radially oriented openings in the outer wall of the central body (10).

10. The rotating spit as claimed in one of the preceding claims, **characterized in that** the heating element (3) is provided, at its lower end, with a device by which it can be secured pivotably and displaceably on a holder (4).

11. The rotating spit as claimed in claim 10, **characterized in that** the holder (4) is U-shaped and the heating element (3) is secured on one side with its lower end on the upper branch (14) of the holder (4), the upper branch (14) of the holder (4) being arranged underneath the foodstuffs (2).

12. The rotating spit as claimed in claim 10 or 11, **characterized in that** the heating element (3) can be removed from the holder (4).

13. The rotating spit as claimed in one of the preceding claims, **characterized in that** a refrigerated counter (30) is arranged underneath the central body (10).

14. The rotating spit as claimed in claim 13, **characterized in that** the refrigerated counter (30) receives the heat exchanger (13).

15. A central body (10) for supporting foodstuffs (2), in particular layered meat and layered meat products, arranged around the central body (10), wherein the central body has at least one channel (11, 12), into which a cold accumulator can be introduced, wherein the central body (10) is provided with a cooling and through which a cooled medium flows, **characterized in that** the central body (10) has at least one delivery channel (11) and at least one removal channel (12) for the cooled medium.

16. The central body as claimed in claim 15, **characterized in that** the central body (10) has a hollow space which is filled with a cold accumulator.

17. The central body as claimed in one of claims 15 or 16 **characterized in that** the central body (10) is provided with at least one channel (11, 12) through which a cooled medium flows or which is filled with a cooled medium.

18. The central body as claimed in one of claims 15 through 17, **characterized in that** the central body (10) is coupled to a heat exchanger (13).

19. The central body as claimed in one of claims 15 through 18, **characterized in that**, arranged at a radial spacing from the central body (10) there is at least one cooling element (20) which is coupled to the central body (10) in a removable manner.

20. The central body as claimed in claim 19, **characterized in that** the cooling element (20) is oriented substantially parallel to the central body (10).

21. The central body as claimed in claim 19 or 20, **characterized in that** the cooling element (20) is provided with at least one channel (21) or hollow space through which a cooled medium flows or which is filled with a cooled medium.

22. The central body as claimed in one of claims 15 through 21, **characterized in that** radially directed openings in the outer wall of the central body (10) for leading the cooled medium into channels formed in the foodstuff (2).

23. The central body as claimed in claim 22, **characterized in that** closure devices are provided for the openings in the outer wall of the central body (10).

## Revendications

1. Tournebroche comprenant un corps central (10) pour recevoir des aliments (2), en particulier de la viande disposée par couches et des produits à base de viande disposés par couches, qui sont agencés autour du corps central (10), et un élément chauffant (3) agissant de l'extérieur sur les aliments (2), le corps central (10) étant doté d'un refroidissement, au moins un canal (11, 12) traversé par un fluide refroidi étant prévu dans le corps central (10), **caractérisé en ce qu'**au moins un canal d'adduction (11) et au moins un canal de départ (12) sont aménagés dans le corps central (10) pour le fluide refroidi.

2. Tournebroche selon la revendication 1, **caractérisé en ce que** le corps central (10) présente une cavité (11, 12) remplie d'un accumulateur de froid.

3. Tournebroche selon la revendication 1 ou 2, **caractérisé en ce que** le corps central (10) est rotatif, en particulier entraîné par moteur, par rapport à l'élément chauffant (3).

4. Tournebroche selon l'une des revendications précédentes, **caractérisé en ce qu'**au moins un élément de refroidissement (20, 21, 22) est agencé à distance radiale du corps central (10), et est couplé de façon amovible avec le corps central (10).

5. Tournebroche selon la revendication 4, **caractérisé en ce que** l'élément de refroidissement (21, 22) est aligné sensiblement parallèlement au corps central (10).

6. Tournebroche selon la revendication 4 ou 5, **caractérisé en ce que** l'élément de refroidissement est muni d'au moins un canal (21, 22) à travers lequel coule un fluide refroidi.

7. Tournebroche selon l'une des revendications précédentes, **caractérisé en ce que** des ouvertures de sortie prévues dans le corps central (10) sont en liaison avec des canaux à l'intérieur des aliments (2), de sorte que le fluide refroidi coule à travers les aliments (2).

8. Tournebroche selon la revendication 7, **caractérisé en ce que** les canaux formés à l'intérieur des aliments (2) sont reliés avec le corps central (10) et avec le flux d'agent de refroidissement par l'intermédiaire d'un capot de couverture (20) muni de conduits d'arrivée et de départ (23,224).

9. Tournebroche selon la revendication 7, **caractérisé en ce que** les canaux formés à l'intérieur des aliments (2) sont reliés avec le flux d'agent de refroidissement par l'intermédiaire d'ouvertures orientées radialement dans la paroi extérieure du corps central (10).

10. Tournebroche selon l'une des revendications précédentes, **caractérisé en ce que** l'élément chauffant (3) est muni à son extrémité inférieure d'un dispositif avec lequel il peut être fixé de façon pivotante et déplaçable à un support (4).

11. Tournebroche selon la revendication 10, **caractérisé en ce que** le support (4) est réalisé en forme de U et l'élément chauffant (3) est fixé unilatéralement par son extrémité inférieure à la branche supérieure (14) du support (4), la branche supérieure (14) du support (4) étant disposée en dessous des aliments (2).

12. Tournebroche selon la revendication 10 ou 11, **caractérisé en ce que** l'élément chauffant (3) peut être ôté du support (4).

13. Tournebroche selon l'une des revendications précédentes, **caractérisé en ce que** une vitrine réfrigérée (30) est disposée sous le corps central (10).

14. Tournebroche selon la revendication 13, **caractérisé en ce que** la vitrine réfrigérée (30) reçoit l'échangeur de chaleur (13).

15. Corps central (10) pour recevoir des aliments (2), en particulier de la viande disposée par couches et des produits à base de viande disposés par couches, qui sont agencés autour du corps central (10), le corps central (10) présentant au moins un canal (11, 12) dans lequel un réfrigérant peut être introduit, le corps central (10) étant muni d'un refroidissement et un fluide refroidi coulant à travers le corps central, **caractérisé en ce qu'**au moins un canal d'adduction (11) et au moins un canal de départ (12) sont aménagés dans le corps central (10) pour le fluide refroidi.

16. Corps central selon la revendication 15, **caractérisé en ce que** le corps central (10) présente une cavité remplie d'un accumulateur de froid.

17. Corps central selon la revendication 15 ou 16, **caractérisé en ce que** dans le corps central est prévu au moins un canal (21,22) à travers lequel coule un fluide refroidi ou qui est rempli d'un fluide refroidi.

18. Corps central selon l'une des revendications 15 à 17, **caractérisé en ce que** le corps central (10) est couplé avec un échangeur de chaleur (13).

19. Corps central selon l'une des revendications 15 à 18, **caractérisé en ce qu'**au moins un élément de refroidissement (20) est agencé à distance radiale du corps central (10), et est couplé de façon amovible avec le corps central (10).

20. Corps central selon la revendication 19, **caractérisé en ce que** l'élément de refroidissement (21) est aligné sensiblement parallèlement au corps central (10).

21. Corps central selon la revendication 19 ou 20, **caractérisé en ce que** l'élément de refroidissement (20) est muni d'au moins un canal (21) ou d'une cavité à travers lequel coule un fluide refroidi ou qui est rempli d'un fluide refroidi.

22. Corps central selon l'une des revendications 15 à 21, **caractérisé en ce que** des ouvertures orientées radialement dans la paroi extérieure du corps central (10) pour faire partir le fluide refroidi dans des canaux formés dans les aliments (2).

23. Corps central selon la revendication 22, **caractérisé en ce qu'**il est prévu des dispositifs de fermeture pour les ouvertures dans la paroi extérieure du corps central (10).
